(19) Europäisches Patentamt
European Patent Office
Office européen des brevets

(11) **EP 3 623 695 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(51) Int Cl.:
*F21V 13/02* (2006.01)     *F21V 8/00* (2006.01)
*F21K 9/61* (2016.01)     *G02B 27/09* (2006.01)
*F21Y 115/10* (2016.01)

(21) Anmeldenummer: **19203191.2**

(22) Anmeldetag: **13.02.2018**

(54) **LEUCHTE SOWIE VERFAHREN ZUR STEUERUNG DER ABSTRAHLCHARAKTERISTIK DERSELBEN UND LICHTMISCHLEITER UND LEUCHTE MIT LICHTMISCHLEITER**

LIGHT AND METHOD FOR CONTROLLING THE BEAM CHARACTERISTIC OF SAME AND LIGHT MIXING CONDUCTOR AND LIGHT WITH LIGHT MIXING CONDUCTORS

LUMINAIRE AINSI QUE PROCÉDÉ DE COMMANDE DES CARACTÉRISTIQUES DU RAYONNEMENT DUDIT LUMINAIRE, CONDUIT DE MÉLANGEUR DE LUMIÈRE ET LUMINAIRE POURVU DE CONDUIT DE MÉLANGEUR DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2017 DE 102017202277**
**03.08.2017 DE 102017213462**
**03.08.2017 DE 102017213466**
**03.08.2017 DE 102017213488**
**18.08.2017 DE 102017214395**
**20.12.2017 DE 202017107771 U**

(43) Veröffentlichungstag der Anmeldung:
**18.03.2020 Patentblatt 2020/12**

(62) Dokumentnummer(n) der früheren Anmeldung(en) nach Art. 76 EPÜ:
**18706682.4 / 3 583 352**

(73) Patentinhaber: **Zumtobel Lighting GmbH**
**6850 Dornbirn (AT)**

(72) Erfinder:
• **EBNER, Stephan**
**6850 Dorbirn (AT)**
• **GASSNER, Patrik**
**6722 St. Gerold (AT)**
• **WIMMER, Rebecca**
**6932 Langen Bei Bregenz (AT)**

(74) Vertreter: **Kiwit, Benedikt**
**Mitscherlich PartmbB**
**Patent- und Rechtsanwälte**
**Sonnenstraße 33**
**80331 München (DE)**

(56) Entgegenhaltungen:
**EP-A2- 1 672 755      WO-A1-2012/004760**
**US-A1- 2006 039 160   US-A1- 2011 058 388**
**US-A1- 2013 163 273   US-A1- 2015 003 061**
**US-A1- 2015 362 144**

**Beschreibung**

Die vorliegende Erfindung betrifft eine Leuchte mit einem Lichtmischleiter sowie ein Verfahren zur Steuerung der Abstrahlcharakteristik dieser Leuchte.

Aus dem Stand der Technik sind Leuchten mit Lichtmischleiter grundsätzlich bekannt. In den Lichtmischleiter eingekoppeltes Licht wird dabei mit Bezug auf Lichtfarbe und Lichtverteilung homogenisiert und über den Lichtmischleiter in eine Voroptik ausgekoppelt. Die Voroptik wiederum sorgt für eine definierte Lichtauskopplung zu einer Auskoppeloptik hin, mittels derer die finale Abstrahlcharakteristik bestimmt wird. Durch Bewegen der Optiken relativ zueinander aufeinander zu und voneinander weg kann eine Zoomfunktion erzielt, also der Abbildungsmaßstab der Leuchte auf einer Beleuchtungsebene geändert werden.

US 2015/003061 und US 2011/058388 offenbaren Leuchten des Stands der Technik. US 2006/039160 offenbart eine Leuchte aufweisend: eine Lichtquelle und einen länglichen Lichtmischleiter; eine dem Lichtmischleiter nachgelagerte Auskoppeloptik; eine Streustruktur, welche zwischen dem Lichtmischleiter und der Auskoppeloptik angeordnet und relativ zum Lichtmischleiter in Hauptlichtführungsrichtung beweglich angeordnet ist.

Es ist nunmehr auch eine Aufgabe der vorliegenden Erfindung, eine Leuchte bereitzustellen, welche eine einfache Anpassung der Abstrahlcharakteristik (insbesondere eine Feinjustierung der Lichtverteilung) bei bevorzugt möglichst homogener Lichtabbildung und besonders bevorzugt ohne wesentliche Beeinflussung des Abbildungsmaßstabes ermöglicht.

Diese Aufgabe wird durch den Gegenstand der unabhängigen Ansprüche gelöst. Die abhängigen Ansprüche bilden den zentralen Gedanken der Erfindung in besonders vorteilhafterweise weiter.

Gemäß einem ersten Aspekt betrifft die vorliegende Erfindung eine Leuchte mit einer Lichtquelle, einer Voroptik sowie einer Auskoppeloptik. Die Lichtquelle weist ein Leuchtmittel zur Lichtabgabe sowie einen länglichen Lichtmischleiter - bevorzugt in der Ausbildung eines Lichtmischstabes - mit einer ersten Lichteinkoppelseite zum Einkoppeln des von dem Leuchtmittel abgegebenen Lichts und einer der ersten Lichteinkoppelseite bezüglich seiner länglichen Erstreckung bzw. Längsachse gegenüberliegenden ersten Lichtauskoppelseite zur Auskopplung des Lichts des Leuchtmittels auf. Die Voroptik weist eine zweite Lichteinkoppelseite zum Einkoppeln des Lichtes der Lichtquelle sowie eine zweite Lichtauskoppelseite zur definierten Lichtauskopplung in einer Hauptlichtführungsrichtung auf. Die Auskoppeloptik ist der Voroptik nachgelagert; also der Voroptik in Hauptlichtführungsrichtung bzw. Hauptabstrahlrichtung der Leuchte gesehen nachgeschaltet. Die Auskoppeloptik weist eine dritte Lichteinkoppelseite zum Einkoppeln des (bzw. allen) aus der Voroptik ausgekoppelten Lichtes sowie eine dritte Lichtauskoppelseite zur definierten Lichtabgabe der Leuchte. Die Leuchte weist des Weiteren eine Streustruktur auf, welche zwischen der Voroptik und der Auskoppeloptik derart angeordnet ist, um das von der Voroptik ausgekoppelte Licht zu streuen, bevor das so gestreute Licht über die dritte Lichteinkoppelseite in die Auskoppeloptik eingekoppelt wird. Die Streustruktur ist zwischen der Voroptik und der Auskoppeloptik und (wenigstens) relativ zur Voroptik - und bevorzugt auch relativ zur Auskoppeloptik - (im Wesentlichen) in Hauptlichtführungsrichtung bzw. in Hauptabstrahlrichtung der Leuchte beweglich angeordnet.

Gemäß der vorliegenden Erfindung wird unter der "Hauptlichtführungsrichtung" eine Hauptrichtung der durch die einzelnen optischen Elemente (Lichtmischleiter, Voroptik, Auskoppeloptik, Streustruktur) jeweils verursachten Lichtstrahlführung verstanden. Dies kann eine Lichtführung innerhalb der Leuchte (also bspw. zwischen zwei Optiken) oder auch die Hauptabstrahlrichtung der Leuchte selbst sein. Die tatsächliche Lichtstrahlführung kann dabei eine im Rahmen eines definierten Öffnungswinkels aufgeweitete Abstrahlcharakteristik (bspw. mit einem Öffnungswinkel von 12° (Spot) bis 40° (Flutlicht)) aufweisen.

Durch die Bereitstellung einer entsprechend in Hauptlichtführungsrichtung beweglich angeordneten Streustruktur wird es ermöglicht, dass die Abbildung der definierten Lichtabgabe bzw. Lichtverteilung der Leuchte gezielt weichgezeichnet werden kann; mithin also die Schärfe der Lichtabbildung der Leuchte wahlweise eingestellt werden kann. Die Verwendung eines Lichtmischleiters als Teil der Lichtquelle ermöglicht ein weitgehend homogenes Durchmischen von eventuellen Farbfehlern (z.B. chromatische Aberration) des optischen Systems. Es handelt sich in der Regel um abbildungsnahe Systeme, welche eine virtuelle Lichtquelle, also insbesondere den Ausgang des Lichtmischleiters bzw. Lichtmischstabes, nach vorne abbilden. Die Streustruktur (bspw. in Form einer Streufolie) ist dabei zwischen den Linsen des abbildenden optischen Systems - also der Voroptik und der Auskoppeloptik - positioniert. Durch die bewegliche Anordnung derselben wird in Ergänzung zu der homogenen Lichtabgabe durch Verwendung des Lichtmischleiters eine Feinjustierung der Lichtverteilung unter im Wesentlichen Beibehaltung des Abbildungsmaßstabes des optischen Systems erzielt.

Der Abbildungsmaßstab (Formelzeichen $\beta$) ist definiert als das Verhältnis zwischen der Bildgröße der optischen Abbildung (y', Bild) eines Gegenstandes und dessen realer Objektgröße (y, Gegenstand).

Gleichung 1: $\qquad \beta = y'/y$

Ein Abbildungsmaßstab mit dem Betrag 1 sagt aus, dass der Gegenstand und seine Abbildung gleich groß sind. Ein Abbildungsmaßstab mit dem Betrag 0,5 sagt aus, dass der Gegenstand doppelt so groß ist wie seine Abbildung. Ein Abbildungsmaßstab mit dem Betrag 2 sagt aus, dass die Abbildung doppelt so groß ist wie der Gegenstand. Im Fall der hier vorgestellten Leuchte bzw. Beleuchtungsoptik ist der Gegenstand die virtuelle Lichtquelle mit einem Durchmesser D und das Bild ist das Abbild der virtuellen Lichtquelle mit einem Durchmesser D' in einer Beleuchtungsebene. Bei gleichbleibendem Abstand zwischen Leuchte und Beleuchtungsebene definiert sich dann der Abbildungsmaßstab wie folgt:

$$\text{Gleichung 2:} \qquad \beta = D'/D$$

Die Lichtquelle (also das Leuchtmittel und/oder der Lichtmischleiter) ist bevorzugt in einzeln ansteuerbare Lichtsegmente unterteilt. Durch die Bereitstellung einzeln ansteuerbarer Lichtsegmente kann es ermöglicht werden, durch wahlweises Ansteuern dieser Lichtsegmente die Abstrahlcharakteristik der definierten Lichtabgabe zu steuern und somit zu variieren bzw. zu verändern. Die Abbildung der den angesteuerten Lichtsegmenten entsprechenden Lichtverteilung in eine der Auskoppeloptik nachgelagerten Beleuchtungsebene kann somit wahlweise in Abhängigkeit der angesteuerten Lichtsegmente variiert werden. Somit kann die Abstrahlcharakteristik und letztlich die Abbildung der Lichtabgabe variiert werden. Dabei ist es auch denkbar, je nach angesteuerten Lichtsegmenten, einen (rein) elektrischen Zoomeffekt zu erzielen, wie im Weiteren noch beschrieben wird.

Die Lichtquelle kann beispielsweise eine oder mehrere LEDs, bevorzugt eine LED-Matrix, umfassen. Die LED-Matrix kann besonders bevorzugt eine Vielzahl einzeln ansteuerbarer LEDs aufweisen. Diese wiederum können dann die einzeln ansteuerbaren Lichtsegmente der Lichtquelle bilden, welche Licht definiert in den Lichtmischleiter einkoppeln. Eine solche Ausgestaltungsform ist bevorzugt dann denkbar, wenn die Auflösung der Matrixanordnung fein genug ist. Dies bietet sich insbesondere an, wenn eine einfarbige LED-Matrixanordnung in die Beleuchtungsebene abgebildet werden soll, sodass in Abhängigkeit der Ausgestaltung der Matrixanordnung sowie ferner der Ansteuerung der ansteuerbaren Lichtsegmente (hier LEDs) quasi jede beliebige Abstrahlcharakteristik generiert werden kann.

Es ist überdies denkbar, dass der Lichtmischleiter bzw. Lichtmischstab als integrales (monolithisches) Bauteil bereitgestellt ist. Somit kann eine gute Lichtdurchmischung des über die erste Lichteinkoppelseite eingekoppelten Lichtes erzielt werden. Alternativ ist es denkbar, dass der Lichtmischleiter bzw. Lichtmischstab in mehrere Segmente unterteilt ist, welche sich jeweils zwischen der ersten Lichteinkoppelseite und der ersten Lichtauskoppelseite erstrecken und bevorzugt die einzeln ansteuerbaren Lichtsegmente bilden. Die Verwendung von Lichtmischstäben im Allgemeinen hat den Vorteil einer guten Durchmischung der Lichtfarben des in den Lichtmischstab bzw. seiner einzelnen Segmente eingekoppelten Lichtes. Die einzelnen Segmente bilden dabei bevorzugt eine Vielzahl kleiner Lichtmischstäbe, welche in geeigneter und bevorzugt kompakter Anordnung den länglichen Lichtmischstab als Teil der Lichtquelle der erfindungsgemäßen Leuchte - nämlich den Lichtmischleiter - bilden. Dies hat den Vorteil, dass die Segmente (also die kleinen Lichtmischstäbe) unabhängig voneinander beliebig angesteuert werden können, und somit die Abstrahlcharakteristik der Leuchte wahlweise variiert werden kann.

Dabei können den Segmenten auf Seiten der ersten Lichteinkoppelseite des Lichtmischleiters jeweils eine oder eine Gruppe einzeln ansteuerbarer LEDs zugeordnet sein (beispielsweise als Teil der vorbezeichneten LED-Matrix). Die Gruppen an LEDs sind dabei bevorzugt gleichartig ausgebildet; sie weisen also bevorzugt die gleichen LEDs auf.

Um eine gute Lichtmischung des Lichtmischleiters im Allgemeinen und - bei segmentierter Bereitstellung des Lichtmischleiters - in den Segmenten des Lichtmischstabes zu erzielen, weist der Lichtmischleiter - bei segmentierter Bereitstellung also seine Segmente jeweils - bevorzugt eine Länge von wenigstens 30mm, ferner bevorzugt wenigstens 50mm und besonders bevorzugt wenigstens 80mm auf.

Gemäß eine bevorzugten Ausgestaltungsform weisen die Segmente ein zentrales Stabelement sowie das zentrale Stabelement umfangsseitig umgebende Ringelemente und/oder Ringsegmente auf. Die ringförmige Anordnung der Segmente des Lichtmischleiters ermöglicht es, durch wahlweises Zuschalten der Segmente von innen nach außen einen rein elektrischen Zoom umzusetzen. Je nach Ausgestaltungsform ist es somit denkbar, dass wahlweise Ringe oder auch nur Ringsegmente wahlweise einzeln schaltbar sind, um eine entsprechende Abstrahlcharakteristik und bevorzugt einen Zoomeffekt zu erzielen. Auch können, je nach Ausgestaltung des Lichtmischleiters bzw. Ansteuerung der einzelnen Segmente bzw. LEDs oder auch der LED-Matrix, beliebige und wahlweise auch stark asymmetrische Lichtverteilungen generiert werden.

Gemäß einer bevorzugten Ausgestaltungsform ist der Lichtmischleiter, bevorzugt wenigstens ein Teil desselben, besonders bevorzugt wenigstens ein Teil der Segmente, weiter bevorzugt wenigstens das zentrale Stabelement, integral mit der Voroptik ausgebildet. Dies hat den Vorteil, dass einerseits weniger Bauteile erforderlich sind und zum anderen die Lichtführung von der Lichtquelle in die Voroptik über den Lichtmischleiter einfach und sicher bereitgesellt ist.

Gemäß einer bevorzugten Ausgestaltungsform weisen die Segmente des Lichtmischleiters einen wenigstens teilweise eckigen Querschnitt auf. Bevorzugt weist dabei wenigstens das zentrale Stabelement im Wesentlichen einen sechseckigen Querschnitt auf. Auf diese Weise kann bei einfacher geometrischer Ausgestaltung und somit einfacher Herstellung der einzelnen Segmente eine besonders kompakte Bauform des Lichtmischstabes und somit insgesamt eine möglichst homogene Lichtabgabe der Leuchte unabhängig davon, welche der ansteuerbaren Lichtsegmente angesteuert sind, erzielt werden.

In einer bevorzugten Ausgestaltungsform ist es denkbar, dass der Lichtmischleiter bzw. wenigstens ein Teil seiner Segmente zu der Voroptik bzw. zu seiner ersten Lichtauskoppelseite hin in eine definierte Querschnittsform übergeht bzw. zuläuft. Besonders bevorzugt ist dabei eine runde oder quasi runde Querschnittsform denkbar. Als "quasi runde Querschnittsform" wird im Rahmen der vorliegenden Erfindung eine näherungsweise runde Querschnittsform verstanden; beispielsweise ein gleichförmiges Vieleck, wie ein gleichförmiges Zwölfeck. Jedoch sind auch andere Querschnittsformen denkbar, je nachdem, welche Abstrahlcharakteristik gewünscht ist.

Der Lichtmischleiter und insbesondere dessen erste Lichtauskoppelseite steht bevorzugt in Kontakt mit der zweiten Lichteinkoppelseite der Voroptik. Bevorzugt ist hierbei insbesondere ein flächiger Kontakt. Auf diese Weise kann das Licht ausgehend von der Lichtquelle direkt und effektiv über den Lichtmischleiter in die Voroptik eingekoppelt werden.

Bevorzugt kann die Voroptik eine sphärische Linse wie eine Halbkugellinse aufweisen. Dabei ist bevorzugt die zweite Lichteinkoppelseite wenigstens teilweise flächig ausgebildet. Die zweite Lichtauskoppelseite kann sphärisch, insbesondere halbkugelfömig, ausgebildet sein. Die Voroptik sorgt somit in besonders effektiver Weise dafür, dass das Licht, welches in die Voroptik von der Lichtquelle kommend eingekoppelt wird, definiert vorgebündelt wird, bevor es in die nachgelagerte Auskoppeloptik gelangt.

Die Auskoppeloptik kann bevorzugt eine sphärische Linse, eine asphärische Linse oder eine Fresnellinse sein. Die Ausgestaltung der Auskoppeloptik ist jedoch durch die vorliegende Erfindung nicht beschränkt und richtet sich nach der gewünschten Abstrahlcharakteristik. Insgesamt ist die Auskoppeloptik bevorzugt derart ausgebildet, dass sie das von der Voroptik kommende Licht (gänzlich) aufnimmt und zur definierten Lichtabgabe bereitstellt; insbesondere definiert ausgerichtet abgibt.

In einer bevorzugten Ausgestaltungsform kann die Auskoppeloptik eine flächige dritte Lichteinkoppelseite aufweisen, über die das Licht in effektiver Weise von der Voroptik kommend und bevorzugt vollumfänglich eingekoppelt werden kann.

Die Streustruktur kann als separate Streuscheibe oder Streufolie zwischen der Voroptik und der Auskoppeloptik angeordnet sein. Somit kann durch gezielte Manipulation der Streuscheibe eine definierte Weichzeichnung eingestellt werden.

Ferner kann auch die Auskoppeloptik relativ zur Voroptik in Hauptlichtführungsrichtung bzw. in Hauptabstrahlrichtung der Leuchte beweglich angeordnet sein. Durch eine Positionsveränderung der Hauptlinse (hier:

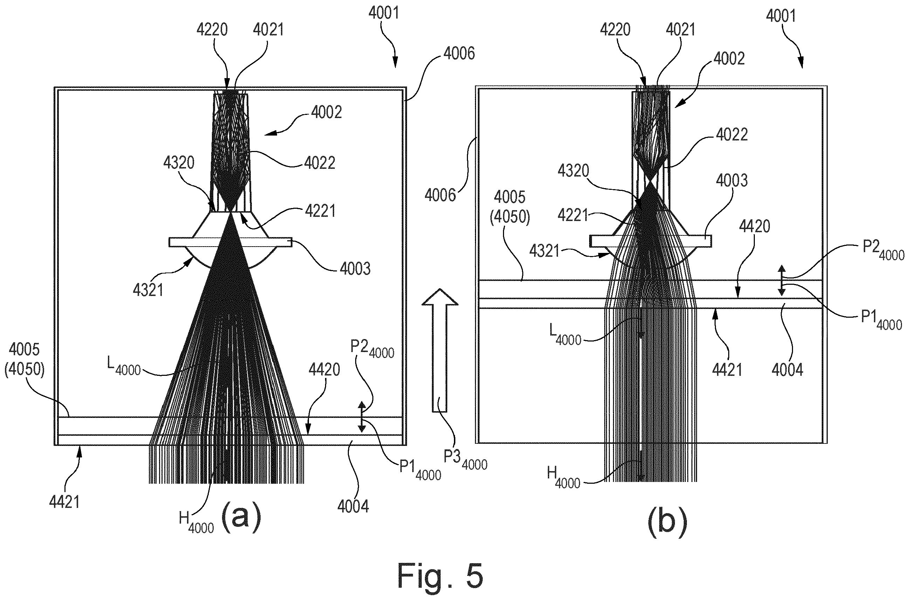

Auskoppeloptik) kann der Abbildungsmaßstab verändert und eingestellt und somit an die jeweilige Beleuchtungssituation angepasst werden. Bei diesem Zoom-Vorgang wird der Fokuspunkt des Abbildungssystems verschoben und eine andere Objektebene innerhalb des Lichtmischleiters wird als virtuelle Lichtquelle verwendet (vgl. bspw. auch Fig. 5). Mit dieser Zoom-Funktion kann der Öffnungswinkel der Leuchte von zum Beispiel 12° Halbwertsbreite (FWHM = full width half maximum; Spot) bis auf zum Beispiel 40° FWHM (Flutlicht) vergrößert werden. Ist die Auskoppeloptik entsprechend beweglich angeordnet, kann die Streustruktur alternativ auch direkt in oder auf der Auskoppeloptik, insbesondere auf der dritten Lichteinkoppelseite, als Oberflächenstruktur bereitgestellt sein. Auf diese Weise wird es neben der Streuung des Lichtes zur Weichzeichnung der Abbildung ermöglicht, beispielsweise auch Rückreflektionen in der Leuchte möglichst gering zu halten.

Eine Bewegung der Streustruktur und/oder der Auskoppeloptik kann bevorzugt mittels einer Manipulationseinheit erfolgen. Die Manipulationseinheit kann dabei eine mechanisch oder elektrisch einstellbare Einheit sein und im letztgenannten Fall beispielsweise einen Elektromotor (z.B. Stellmotor) aufweisen.

Die Streustruktur weist bevorzugt eine Strahlstreuung von 2° bis 15°, bevorzugt 5° bis 10° auf. Die Position der Streustruktur hängt insbesondere von der Stärke der Streuung ab. Folien mit starker Streuung werden bevorzugt näher an der ersten Linse (Voroptik) positioniert und Folien mit schwacher Streuwirkung näher an der Hauptlinse (Auskoppeloptik). Um einen möglichst großen Einstellbereich zu ermöglichen, wird die Streustärke typischerweise so gewählt, dass der Faktor Fs = 1,5 bei einer Positionierung nahe der Auskoppeloptik (z.B. ¼ der Distanz zur Voroptik) erreicht wird. Die Streustruktur weist somit bevorzugt eine Streustärke Fs = FWTM/FWHM von Fs = 1,5 bei einer Positionierung der Streustruktur von ¾ der Distanz von der Voroptik zur Auskoppeloptik hin auf. FWHM ist dabei die Halbwertsbreite (full width half maximum) und FWTM die Zehntelwertsbreite (full width tenth maximum). Dadurch kann in beide Richtungen, also entlang der Hauptlichtführungsrichtung zur Voroptik und zur Auskoppeloptik hin, die Abbildung der Lichtverteilung auf einer Beleuchtungsebene schärfer oder weicher und somit die Lichtverteilungskurve anwendungsbezogen gut eingestellt werden.

Die Leuchte weist bevorzugt einen vorzugsweise einstellbaren Öffnungswinkel der Abstrahlcharakteristik im Bereich von 4° FWHM bis 60° FWHM, vorzugsweise im Bereich von 12° FWHM bis 40° FWHM, alternativ für eine enge Abstrahlcharakteristik im Bereich von 5° FWHM bis 25° FWHM, vorzugsweise von 8° FWHM bis 16° FWHM auf. Somit wird eine gut anwendbare Lichtverteilungskurve sichergestellt. Dabei wird in der Regel davon ausgegangen, dass die Lichtverteilungskurve typischerweise eine glockenartige Intensitätsverteilung aufweist.

Die Streustruktur hat - wie zuvor dargestellt - insbesondere die Aufgabe, das Abbild der virtuellen Lichtquelle weich zu zeichnen. Das heißt, das Verhältnis von Halbwertsbreite (FWHM: full width half maximum) zu Zehntelwertsbreite (FWTM: full width tenth maximum) kann durch die Aufstreuungsstärke der Streustruktur und deren Position relativ zu den Optiken eingestellt werden. Der Öffnungswinkel der Abstrahlcharakteristik bleibt dabei nahezu erhalten. Vorzugsweise ändert sich ein Öffnungswinkel der Abstrahlcharakteristik der Leuchte ausgehend von einem mittleren Wert um maximal +/- 4° durch das Bewegen der Streustruktur (also durch das Weichzeichnen oder Scharfstellen) insbesondere relativ zur Voroptik, vorzugsweise um maximal +/- 2°. Die Stärke der Weichzeichnung bzw. die Streustärke wird, wie zuvor beschrieben, dabei bevorzugt wie folgt als Faktor dargestellt:

Gleichung 3: Fs = FWTM/FWHM.

Gemäß einem zweiten Aspekt betrifft die vorliegende Erfindung ferner ein Verfahren zur Steuerung der Abstrahlcharakteristik (insbesondere Weichzeichnung bzw. Scharfstellung) einer Leuchte. Dieses Verfahren weist dabei die folgenden Schritte auf: In einem ersten Schritt wird eine Leuchte gemäß der vorliegenden Erfindung bereitgestellt. In einem zweiten Schritt wird die Streustruktur in Hauptlichtführungsrichtung bzw. Hauptabstrahlrichtung zwischen der Voroptik und der Auskoppeloptik wahlweise derart (wenigstens) relativ zur Voroptik bewegt, vorzugsweise mittels der Manipulationseinheit, dass die Schärfe einer Abbildung der Lichtverteilung auf einer der Auskoppeloptik nachgelagerten Beleuchtungsebene eingestellt wird.

Das Verfahren kann ferner einen Schritt des wahlweisen Bewegens der Auskoppeloptik in Hauptlichtführungsrichtung (beispielsweise entsprechend der Hauptabstrahlrichtung der Leuchte) relativ zur Voroptik aufweisen. Die Bewegung kann dabei bevorzugt mittels der Manipulationseinheit erfolgen. Mittels der Bewegung wird der Abbildungsmaßstab der Abbildung der Lichtverteilung auf der Beleuchtungsebene wahlweise und definiert eingestellt.

Das Verfahren kann ferner einen Schritt zum wahlweise einzelnen Ansteuern der Lichtsegmente zur Abbildung einer den angesteuerten Lichtsegmenten entsprechenden Lichtverteilung in einer der Auskoppeloptik nachgelagerten Beleuchtungsebene aufweisen. Indem somit die Lichtsegmente in beliebiger Weise angesteuert werden können, kann in einfacher Weise elektrisch die Abstrahlcharakteristik eingestellt und bei entsprechender Ansteuerung auch ein (rein) elektrischer Zoom realisiert werden.

Weitere Ausgestaltungen und Vorteile der vorliegenden Erfindung werden anhand der begleitenden Figuren der folgenden Zeichnungen beschrieben. Es zeigen:

Figur 1     eine perspektivische Schnittansicht einer erfindungsgemäßen Leuchte gemäß einem ersten Ausführungsbeispiel der vorliegenden Erfindung,

Figur 2     eine perspektivische Schnittansicht einer erfindungsgemäßen Leuchte gemäß einem zweiten Ausführungsbeispiel der vorliegenden Erfindung,

Figur 3     eine seitliche Schnittansicht der erfindungsgemäßen Leuchte gemäß Figur 2 mit unterschiedlicher Positionierung der Streustruktur (a) entfernt von der Voroptik und (b) nahe der Voroptik, sowie der jeweiligen Strahlführung,

Figur 4     unterschiedliche Abbildungen der Lichtverteilungen in einer Beleuchtungsebene (a) gemäß der Leuchte nach Figur 3a und (b) gemäß der Leuchte nach Figur 3b,

Figur 5     eine seitliche Schnittansicht der erfindungsgemäßen Leuchte gemäß Figur 2 mit unterschiedlicher Positionierung der Auskoppeloptik und der Streustruktur (a) entfernt von der Voroptik und (b) nahe der Voroptik, sowie der jeweiligen Strahlführung,

Figur 6     eine seitliche Schnittansicht einer Leuchte gemäß einem dritten Ausführungsbeispiel der vorliegenden Erfindung,

Figur 7     eine perspektivische Darstellung eines Lichtmischleiters der erfindungsgemäßen Leuchte gemäß Figur 6,

Figur 8     eine perspektivische Detailansicht des Lichtmischleiters gemäß Figur 7,

Figur 9     eine perspektivische Schnittansicht einer erfindungsgemäßen Leuchte gemäß einem vierten Ausführungsbeispiel der vorliegenden Erfindung,

Figur 10     perspektivische Ansichten unterschiedlicher Ausgestaltungsformen eines Lichtmischleiters sowie einer Voroptik einer erfindungsgemäßen Leuchte der vorliegenden Erfindung,

Figur 11     unterschiedliche Abbildungen von den angesteuerten Lichtsegmenten entsprechenden Lichtverteilungen einer Leuchte gemäß Figur 6 — jedoch ohne Streustruktur - in einer Beleuchtungsebene,

Figur 12     die Abbildungen gemäß Figur 11 bei Verwendung der erfindungsgemäßen Leuchte gemäß Figur 6 mit Streustruktur,

Figur 13    seitliche Ansichten unterschiedlicher Ausführungsbeispiele einer Auskoppeloptik einer erfindungsgemäßen Leuchte der vorliegenden Erfindung.

In den Figuren sind unterschiedliche Ausführungsbeispiele einer erfindungsgemäßen Leuchte 4001 gezeigt. Gleiche Merkmale sind dabei mit gleichen Bezugszeichen versehen und die einzelnen Merkmale der unterschiedlichen Ausführungsbeispiele sind in beliebiger Weise mit- und untereinander kombinierbar und austauschbar.

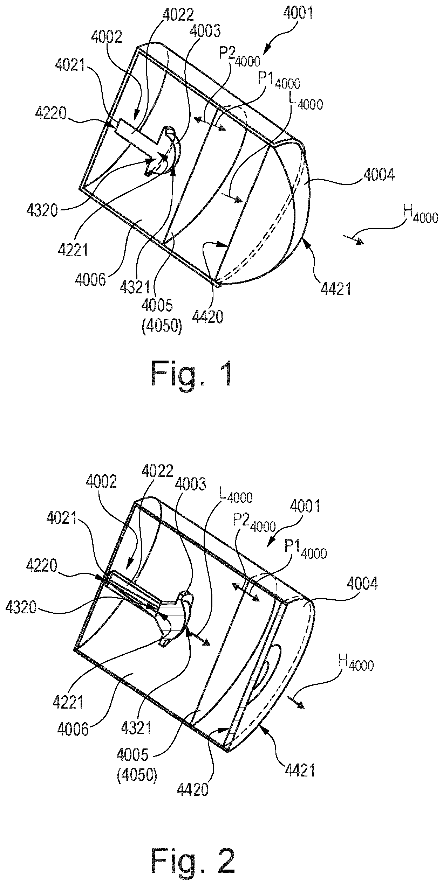

Insbesondere die Figuren 1, 2, 3, 5, 6, und 9 zeigen vier Ausführungsbeispiele einer Leuchte 4001 gemäß der vorliegenden Erfindung. Diese Leuchten 4001 zeichnen sich alle dadurch aus, dass sie eine Lichtquelle 4002, eine der Lichtquelle 4002 in Hauptlichtführungsrichtung $L_{4000}$ nachgelagerte Voroptik 4003 sowie eine der Voroptik 4003 in Hauptlichtführungsrichtung $L_{4000}$ nachgelagerte Auskoppeloptik 4004 aufweisen. Die Hauptlichtführungsrichtung $L_{4000}$ entspricht dabei der Hauptrichtung, die das Licht durch die Leuchte 4001 nimmt; bevorzugt entspricht diese der Hauptabstrahlrichtung $H_{4000}$ der Leuchte 4001.

Die Lichtquelle 4002 weist ein Leuchtmittel 4021 zur Lichtabgabe sowie einen länglichen Lichtmischleiter 4022 (hier in Form eines Lichtmischstabes 4022) mit einer ersten Lichteinkoppelseite 4220 zum Einkoppeln des von dem Leuchtmittel 4021 abgegebenen Lichts und einer der ersten Lichteinkoppelseite 4220 bezüglich seiner länglichen Erstreckung bzw. Längsachse gegenüberliegenden ersten Lichtauskoppelseite 4221 zur Auskopplung des Lichts des Leuchtmittels 4021 auf. Die Lichtquelle 4021 kann eine oder mehrere LEDs aufweisen. Sie kann in letztgenanntem Fall beispielsweise in Form einer LED-Matrix bereitgestellt sein.

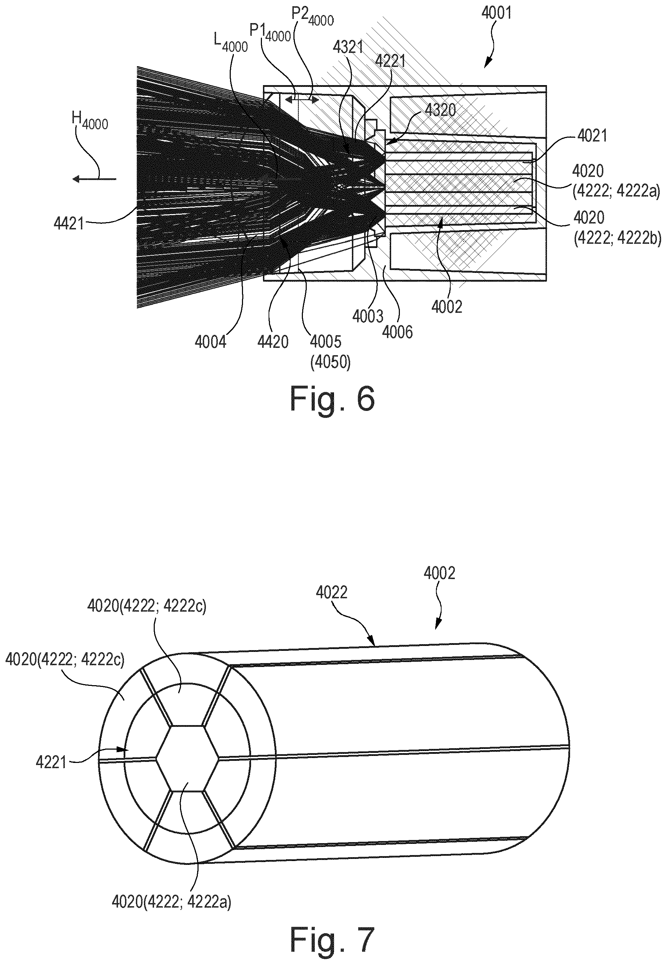

Die Lichtquelle 4002 kann, wie beispielsweise den Ausführungsbeispielen der Figuren 6 bis 10 zu entnehmen ist, in einzeln ansteuerbare Lichtsegmente 4020 unterteilt sein. Die Lichtquelle 4002 kann dabei beispielsweise eine LED-Matrix umfassen, welche eine Vielzahl einzeln ansteuerbarer LEDs 4021 aufweist, welche die einzeln ansteuerbaren Lichtsegmente 4020 bilden. Dabei kann eine beliebige Anzahl an LEDs 4021 in einer beliebigen LED-Matrixanordnung vorgesehen sein. Die LEDs 4021 können einzeln oder auch in Gruppen oder alle gleichzeitig angesteuert werden.

Bevorzugt sind die Gruppen an LEDs 4021 gleichartig ausgebildet, weisen also bevorzugt die gleichen LEDs 4021 auf.

Mit Verweis auf die Ausführungsbeispiele der Figuren 1, 2, 3 und 5 kann der Lichtmischleiter 4022 als integrales Bauteil ausgebildet sein. Der Lichtmischleiter 4022 ist also bevorzugt monolithisch ausgebildet, um einen einfachen Lichtmischleiter 4022 bereitzustellen.

Der Lichtmischleiter 4022 kann alternativ auch in mehrere Segmente 4222 unterteilt sein, welche sich jeweils längs zwischen der Lichteinkoppelseite 4220 und der Lichtauskoppelseite 4221 des Lichtmischleiters 4022 erstrecken. Die Segmente 4222 können dann die einzeln ansteuerbaren Lichtsegmente 4020 bilden.

Wie den Figuren 6 bis 9 zu entnehmen ist, können die Segmente 4222 ein zentrales Stabelement 4222a sowie das zentrale Stabelement 4222a umfangsseitig umgebende Ringelemente 4222b und/oder Ringsegmente 4222c aufweisen. Auch andere Anordnungen der Segmente 4222 sind denkbar.

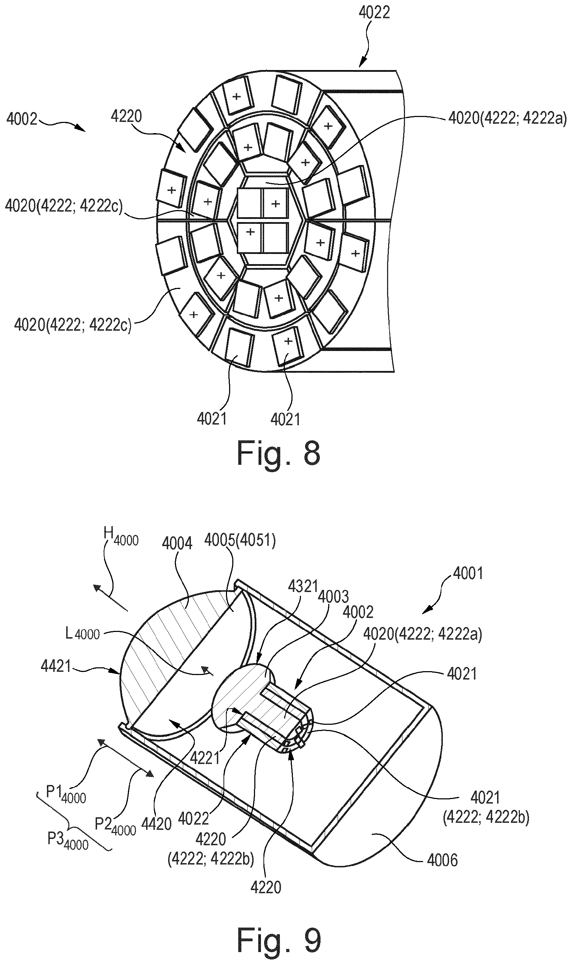

Wie beispielsweise den Figuren 7 und 8 zu entnehmen ist, können die Segmente 4222 des Lichtmischleiters 4022 einen wenigstens teilweise eckigen Querschnitt aufweisen. So kann beispielsweise wenigstens das zentrale Stabelement 4222a im Wesentlichen einen sechseckigen Querschnitt aufweisen. Auf diese Weise kann eine möglichst einfache Querschnittsform bei gleichzeitig einfacher Bereitstellung einer kompakten Struktur des Lichtmischleiters 4022, wie insbesondere den Figuren 7 und 8 zu entnehmen ist, bereitgestellt werden. Denn um dieses sechseckige zentrale Stabelement 4222a lassen sich die diesen umfangsseitig umgebenden Elemente 4222b bzw. Segmente 4222c kompakt anordnen.

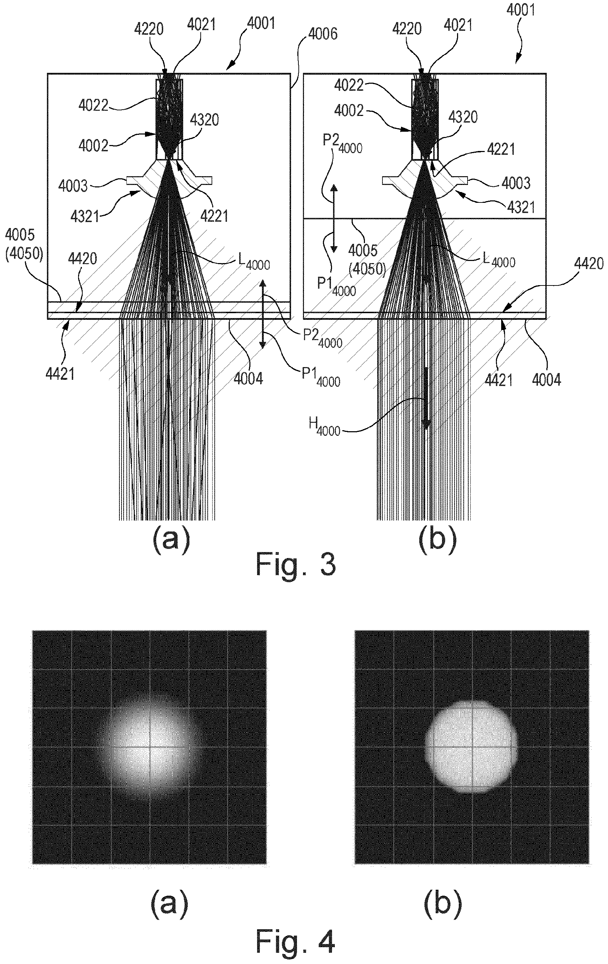

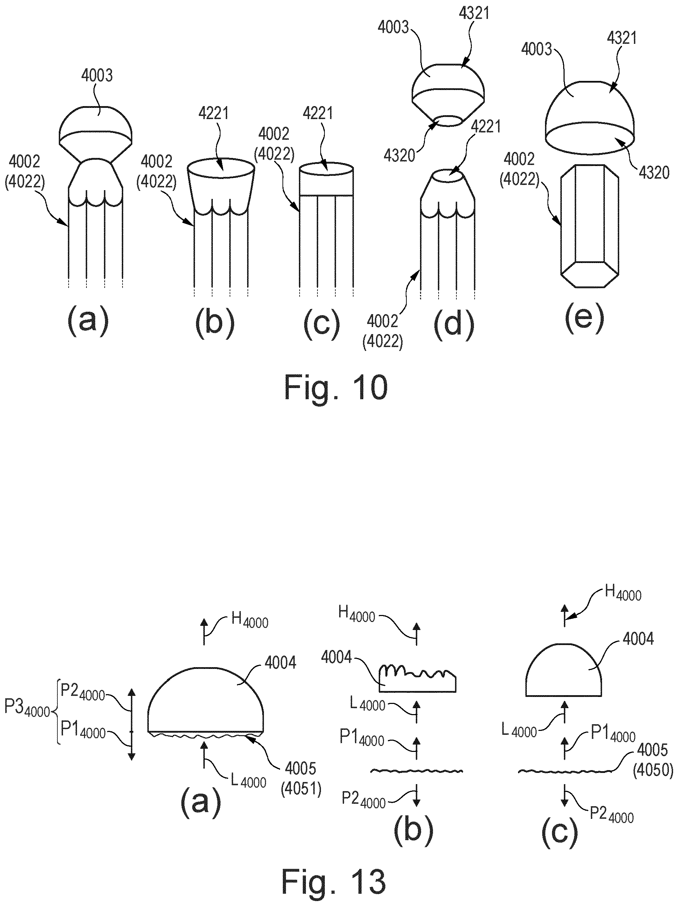

Gemäß einer bevorzugten Ausgestaltungsform kann der Lichtmischleiter 4022 zu der Voroptik 4003 oder zu seiner (ersten) Lichtauskoppelseite 4221 hin in eine definierte Querschnittsform übergehen bzw. zulaufen. Beispielsweise ist hier eine (quasi) runde Querschnittsform denkbar. Entsprechende Ausgestaltungsformen sind hier beispielhaft der Figur 10 zu entnehmen. Gemäß diesen Ausführungsbeispielen geht der Lichtmischleiter 4022 dabei bevorzugt in eine (quasi) runde Querschnittsform über, wobei dies durch Zusammenlaufen (vgl. Figuren 5a und 5d), Aufweiten (vgl. Figur 5b) oder einen konstanten Querschnitt (vgl. Figur 5c) denkbar ist. Auch das Ausführungsbeispiel der Figuren 2 und 3 zeigt eine solche Ausgestaltung. Der dort dargestellte Lichtmischleiter 4022 geht von einer quasi quadratischen Querschnittsform auf seiner Lichteinkoppelseite 4220 in eine quasi runde Querschnittsform auf seiner Lichtauskoppelseite 4221 über.

Wie insbesondere der Figur 8 zu entnehmen ist, kann den Segmenten 4222 auf Seiten der Lichteinkoppelseite 4220 des Lichtmischleiters 4022 bevorzugt jeweils eine oder eine Gruppe einzeln ansteuerbarer LEDs 4021 zugeordnet sein. Diese LEDs 4021 können durch die vorbeschriebene LED-Matrix gebildet sein. Wie zuvor bereits beschrieben kann auch bei diesem Ausführungsbeispiel eine mögliche Gruppe an LEDs für alle Segmente 4222 oder auch nur ein Teil von diesen gleichartig ausgebildet sein; wobei diese dann bevorzugt die gleichen LEDs 4021 aufweisen, um somit eine harmonische Lichtabgabe zu erzielen.

Um eine gute Lichtmischung in dem Lichtmischleiter 4022 und - bei segmentartiger Ausgestaltung - in den einzelnen Segmenten 4222 des so ausgebildeten Lichtmischleiters 4022 zu erzielen, weist der Lichtmischleiter 4022 und - soweit vorhanden - seine Segmente 4222 bevorzugt eine Länge von wenigstens 30mm, vorzugsweise wenigstens 50mm, besonders bevorzugt wenigstens 80mm auf.

Die Voroptik 4003 der erfindungsgemäßen Leuchte 4001 weist eine zweite Lichteinkoppelseite 4320 zum Einkoppeln des Lichtes der Lichtquelle 4002 und bevorzugt jeder der Lichtsegmente 4020 der Lichtquelle 4002 auf. Mit anderen Worten ist die Leuchte 4001 derart bereitgestellt, dass über den Lichtmischleiter 4022 und bei segmentartiger Ausgestaltung wahlweise über jedes Lichtsegment 4020, sofern es angesteuert wird, das Licht des Lichtmischleiters 4022 bzw. des entsprechenden Lichtsegments 4020 in die Voroptik 4003 eingekoppelt wird. Hierzu weist die Lichtauskoppelseite 4221 des Lichtmischleiters 4022 bevorzugt auf die Lichteinkoppelseite 4320 der Voroptik 4003 und steht besonders bevorzugt mit dieser in (flächigem) Kontakt bzw. ist mit dieser integral ausgebildet. Der Lichtmischleiter 4022 und insbesondere dessen erste Lichtauskoppelseite 4221 steht bevorzugt in Kontakt mit der zweiten Lichteinkoppelseite 4320 der Voroptik 4003. Besonders bevorzugt ist hier ein flächiger Kontakt denkbar, wie er in den Ausführungsbeispielen der Figuren 2, 3, 5 und 10 gezeigt ist.

Wie beispielsweise in Figur 1 dargestellt, kann der Lichtmischleiter 4022 integral mit der Voroptik 4003 ausgebildet sein. Es ist beispielsweise bei der segmentartigen Ausgestaltung auch denkbar, wie in Figur 9 oder Figur 10a dargestellt, dass nur ein Teil des Lichtmischleiters 4022 wie wenigstens ein Teil der Segmente 4222 - hier bevorzugt wenigstens das zentrale Stabelement 4222a - integral mit der Voroptik 4003 ausgebildet ist.

Neben der zweiten Lichteinkoppelseite 4320 weist die Voroptik 4003 ferner eine zweite Lichtauskoppelseite 4321 zur definierten Lichtauskopplung in der Hauptlichtführungsrichtung $L_{4000}$ auf. Insgesamt kann die Voroptik 4003 eine sphärische Linse wie eine Halbkugellinse aufweisen bzw. als solche ausgebildet sein. Die zweite Lichteinkoppelseite 4320 kann dabei wenigstens teilweise flächig ausgebildet sein; bevorzugt wenigstens der der Lichtquelle 4002 zugewandte bzw. mit dieser in Kontakt stehende Bereich der Lichteinkoppelseite 4320. Die zweite Auskoppelseite 4321 kann bevorzugt sphärisch und insbesondere halbkugelförmig ausgebildet sein, um eine entsprechend gewünschte Vorbündelung des Lichtes vor Eintritt in die der Voroptik 4003 nachgelagerte Auskoppeloptik 4004 zu ermöglichen.

Der Voroptik 4003 ist die vorbezeichnete Auskoppeloptik 4004 nachgelagert; insbesondere derart, dass das aus der Voroptik 4003 ausgekoppelte Licht vollständig in die Auskoppeloptik 4004 eingekoppelt werden kann. Die Auskoppeloptik 4004 weist hierzu eine dritte Lichteinkoppelseite 4420 zum Einkoppeln des aus der Voroptik 4003 ausgekoppelten Lichts sowie eine dritte Lichtauskoppelseite 4421 zur definierten Lichtabgabe der Leuchte 4001, wie sie beispielhaft in den Figuren 3, 5 und 6 dargestellt ist.

Die Auskoppeloptik 4004 ist dabei nicht auf eine spezielle Form beschränkt. Insbesondere hängt die Form von der gewünschten Abstrahlcharakteristik der Leuchte 4001 ab. Beispielsweise kann die Auskoppeloptik 4004 eine sphärische Linse, eine asphärische Linse oder auch eine Fresnel-Linse sein. Dabei ist insbesondere die dritte Lichtauskoppelseite 4421 der Auskoppeloptik 4004 entsprechend ausgebildet, wie beispielsweise in den Figuren 1, 6, 9, 10 und 13 gezeigt.

In einer bevorzugten Ausgestaltungsform weist die Auskoppeloptik 4004 eine flächige dritte Lichteinkoppelseite 4420 auf, über die das Licht von der Voroptik 4003 kommend bevorzugt vollständig und gezielt eingekoppelt werden kann.

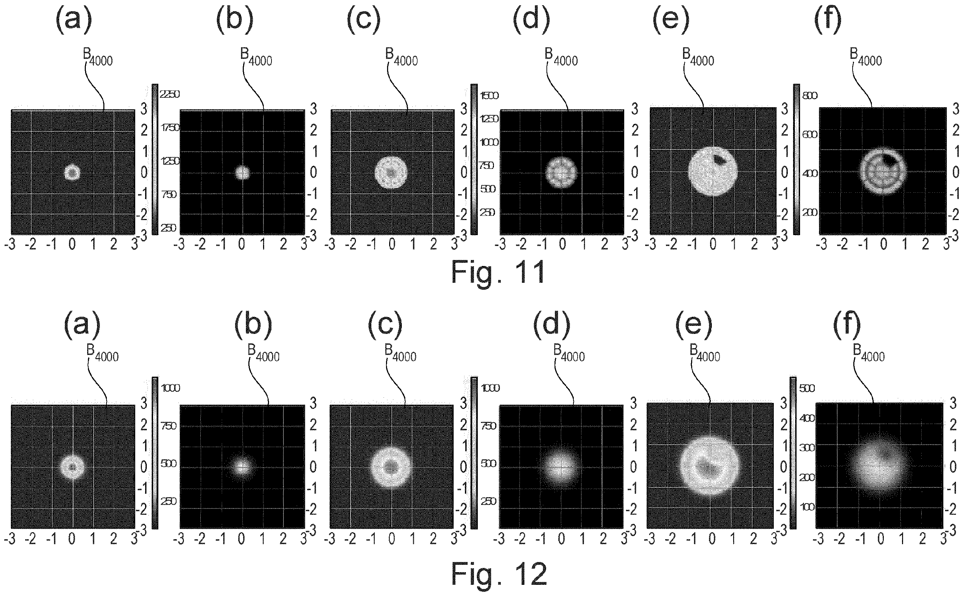

Die erfindungsgemäße Leuchte 4001 weist ferner eine Streustruktur 4005 auf. Diese ist zwischen der Voroptik 4003 und der Auskoppeloptik 4004 angeordnet und dient einer (weiteren) Weichzeichnung der mittels der Leuchte 4001 erzielten Lichtabgabe bzw. der Abbildung einer den angesteuerten Lichtsegmenten 4020 entsprechenden Lichtverteilung in einer der Auskoppeloptik 4004 nachgelagerten Beleuchtungsebene B4000. Dies ist beispielsweise den Figuren 3, 4 und 12 zu entnehmen. Figur 11 stellt unterschiedliche Ansteuerungsvarianten der Leuchte 4001 gemäß Figur 6 jedoch ohne Verwendung einer Streustruktur 4005 dar (von links nach rechts werden zunehmend Ringstrukturen elektrisch hinzugeschaltet, so dass eine Art elektrischer Zoom-Effekt erzielt wird, wobei in den beiden rechten Darstellungen der Figur 11 ein einzelnes Lichtsegment 4020 ausgespart ist, um eine asymmetrische Lichtverteilung zu erzielen). Figur 12 zeigt dieselben Abbildungen wie Figur 11 unter zusätzlicher Verwendung einer erfindungsgemäßen Streustruktur 4005, wie sie der Leuchte 4001 gemäß Figur 6 zu entnehmen ist. Hier ist gut die zusätzliche Weichzeichnung der Abbildung in der Beleuchtungsebene $B_{4000}$ zu erkennen. Mittels der Streustruktur 4005 wird folglich das von der Voroptik 4003 ausgekoppelte Licht gestreut, bevor das so gestreute Licht über die dritte Lichteinkoppelseite 4420 in die Auskoppeloptik 4004 eingekoppelt wird.

Erfindungsgemäß ist die Streustruktur 4005 in Hauptlichtführungsrichtung $L_{4000}$ bzw. in Hauptabstrahlrichtung $H_{4000}$ der Leuchte 4001 zwischen der Voroptik 4003 und der Auskoppeloptik 4004 und (wenigstens) relativ zur Voroptik 4003 (und bevorzugt auch relativ zur Auskoppeloptik 4004) beweglich $P1_{4000}$, $P2_{4000}$ angeordnet.

Vorzugsweise kann die Auskoppeloptik 4004 relativ zur Voroptik 4003 in Hauptlichtführungsrichtung $L_{4000}$ bzw. in Hauptabstrahlrichtung $H_{4000}$ der Leuchte 4001 beweglich $P3_{4000}$ angeordnet sein, wie dies beispielsweise in Figur 5 gezeigt ist. Hier bewegt sich die Streustruktur 4005 zusammen mit der Auskoppeloptik 4004, wobei deren Bewegungen besonders bevorzugt auch unabhängig voneinander ausgeführt werden können.

Die Streustruktur 4005 ist bevorzugt als separate Streuscheibe oder Streufolie 4050 zwischen der Voroptik 4003 und der Auskoppeloptik 4004 angeordnet, wie dies in den Figuren 1, 2, 3, 5, 6, 13b und 13c gezeigt ist. Die Streuscheibe 4050 lässt sich in diesem Fall bevorzugt unabhängig von anderen optischen Elementen der Leuchte 4001, wie beispielsweise der Voroptik 4003 oder der Auskoppeloptik 4004, bewegen.

Darüber hinaus ist es auch denkbar, dass die Streustruktur 4005 direkt in oder auf der Auskoppeloptik 4004 und insbesondere auf der dritten Lichteinkoppelseite 4420 als Oberflächenstruktur 4051 bereitgestellt ist, wie dies beispielhaft in den Ausführungsformen gemäß der Figuren 9 oder 13a dargestellt ist, wenn die Auskoppeloptik 4004 entsprechend beweglich ausgebildet ist. Auch eine beliebige Kombination von vorbeschriebenen Streustrukturen 4005 - also unabhängig und abhängig von der Auskoppeloptik 4004 bewegliche Streustrukturen 4005 - ist denkbar.

Des Weiteren kann beispielsweise eine hier nicht dargestellte Manipulationseinheit zum Bewegen der Streustruktur 4005 und/oder der Auskoppeloptik 4004 bereitgestellt sein. Diese kann beispielsweise mechanisch oder auch elektrisch angetrieben sein.

Die Streustruktur 4005 weist bevorzugt eine Strahlstreuung von 2° bis 15°, bevorzugt 5° bis 10° auf. Die Erfindung ist hierauf jedoch nicht beschränkt. Die Streustruktur 4005 kann ferner eine Streustärke $F_s = FWTM/FWHM$ von $F_s = 1,5$ bei einer Positionierung der Streustruktur 4005 von ¾ der Distanz von der Voroptik 4003 zur Auskoppeloptik 4004 hin aufweisen. FWHM bezeichnet dabei die Halbwertsbreite (full width half maximum) und FWTM die Zehntelwertsbreite (full width tenth maximum). Somit kann die Streustruktur 4005 in ausreichender Weise in beide Richtungen - also bevorzugt entlang der Hauptlichtführungsrichtung $L_{4000}$ bzw. Hauptabstrahlrichtung $H_{4000}$ zur Voroptik 4003 oder zur Auskoppeloptik 4004 hin - bewegt werden, um eine Abbildung der Lichtverteilung auf einer der Auskoppeloptik 4004 nachgelagerten Beleuchtungsebene $B_{4000}$ schärfer (vgl. Figur 3b in Verbindung mit Figur 4b) oder weicher (vgl. Figur 3a in Verbindung mit Figur 4a) einzustellen.

Die Leuchte 4001 weist bevorzugt einen Öffnungswinkel der Abstrahlcharakteristik im Bereich von 4° FWHM bis 60° FWHM, vorzugsweise im Bereich von 12° FWHM bis 40° FWHM, alternativ für eine enge Abstrahlcharakteristik im Bereich von 5° FWHM bis 25° FWHM, vorzugsweise von 8° FWHM bis 16° FWHM, auf. Dieser Öffnungswinkel kann, wie die Figur 5 zeigt, beispielsweise bei beweglicher Auskoppeloptik 4004 auch einstellbar sein.

In einer besonders bevorzugten Ausgestaltungsform ändert sich ein Öffnungswinkel der Abstrahlcharakteristik der Leuchte 4001 ausgehend von einem mittleren Wert um maximal +/- 4° durch das Bewegen der Streustruktur 4005 relativ zur Voroptik 4003, vorzugsweise um maximal +/- 2°. Somit kann bei Verwendung eines Lichtmischleiters 4022 zur guten Durchmischung des Lichtes eine definierte Feinjustierung der Lichtverteilung im Wesentlichen unter Beibehaltung des gewünschten Abbildungsmaßstabes des optischen Systems erzielt werden.

Insbesondere mit Verweis auf die Ausführungsbeispiele der Figuren 1, 2, 3, 5, 6 und 9 kann die erfindungsgemäße Leuchte 4001 ferner ein Leuchtengehäuse 4006 aufweisen, in dem die einzelnen Elemente der Leuchte 4001, also insbesondere die Lichtquelle 4002 mit Leuchtmittel 4021 und Lichtmischleiter 4022, die Voroptik 4003, die Streustruktur 4005 und die Auskoppeloptik 4004 angeordnet sind.

Mit der erfindungsgemäßen Leuchte 4001 ist es nunmehr möglich, ein Verfahren zur Steuerung der Abstrahlcharakteristik dieser Leuchte 4001 durchzuführen. Nach der Bereitstellung der erfindungsgemäßen Leuchte 4001 kann sodann die Streustruktur 4005 wahlweise in Hauptlichtführungsrichtung zwischen der Voroptik 4003 und der Auskoppeloptik 4004 und relativ zur Voroptik 4003 derart bewegt werden, vorzugsweise mittels der Manipulationseinheit, um die Schärfe einer Abbildung der Lichtverteilung auf einer der Auskoppeloptik 4004 nachgelagerten Beleuchtungsebene $B_{4000}$ einzustellen.

Mit der vorliegenden Erfindung ist es somit möglich, unter Verwendung eines optischen Systems mit einer einen Lichtmischleiter 4022 aufweisender Lichtquelle 4002, einer dieser nachgelagerten Voroptik 4003, einer dieser nachgelagerten Streustruktur 4005 und einer dieser nachgelagerten Auskoppeloptik 4004 durch bewegliche Anordnung der Streustruktur 4005 eine Feinjustierung (schärfer oder weicher Einstellen) der Lichtverteilung zu ermöglichen, während ein Abbildungsmaßstab des optischen Systems im Wesentlichen beibehalten sowie eine gute Lichtdurchmischung und somit eine Verringerung oder Vermeidung von Farbfehlern erzielt wird. Durch den Einsatz der erfindungsgemäßen beweglich vorgesehenen Streustruktur 4005 kann die Abbildung der einzelnen Lichtsegmente in beliebiger Weise weich- oder scharfgezeichnet werden, um somit eine insgesamt besonders harmonische Lichtabbildung zu erzielen. Durch die Verwendung des Lichtmischleiters 4022 kann eine besonders homogene Lichtmischung ermöglicht und somit eine insgesamt homogene Lichtabgabe bzw. Lichtabbildung erzielt werden.

Durch wahlweises Bewegen der Auskoppeloptik 4004 in Hauptlichtführungsrichtung $L_{4000}$ bzw. Hauptabstrahlrichtung $H_{4000}$ relativ zur Voroptik 4003 kann beispielsweise zusätzlich der Abbildungsmaßstab der Abbildung der Lichtverteilung auf der Beleuchtungsebene $B_{4000}$ eingestellt werden. Hierzu wird sich bevorzugt ebenso einer entsprechend vorgesehenen Manipulationseinheit bedient. Somit lässt sich, wie beispielsweise der Figur 5 zu entnehmen ist, ein optischer Zoom erzielen.

Vorzugsweise können ferner die einzeln ansteuerbaren Lichtsegmente 4020 zur Abbildung einer den angesteuerten Lichtsegmenten 4020 entsprechenden Lichtverteilung in einer der Auskoppeloptik 4004 nachgelagerten Beleuchtungsebene $B_{4000}$ wahlweise einzeln angesteuert werden, um somit entsprechende unterschiedliche Abbildungen zu erzielen. Somit ist es ergänzend möglich, einfach mittels elektrischer Ansteuerung einzeln ansteuerbarer Lichtsegmente 4020 die Abbildung einer Leuchte 4001 - mittels einer den angesteuerten Lichtsegmenten 4020 entsprechenden Lichtverteilung - in einer der Leuchte 4001 bzw. deren Auskoppeloptik 4004 nachgelagerten Beleuchtungsebene $B_{4000}$ zu erzielen. Somit lässt sich auch, wie beispielsweise in den Figuren 11 und 12 gezeigt, ein rein elektrischer Zoom-Effekt erzielen.

Die Erfindung ist nicht auf die vorhergehenden Ausführungsbeispiele beschränkt, sofern sie vom Gegenstand der folgenden Ansprüche umfasst ist. Die Merkmale der vorbeschriebenen Ausführungsbeispiele sind in beliebiger Weise mit- und untereinander kombinierbar und austauschbar.

Es ist eine Leuchte bereitgestellt, aufweisend: eine Lichtquelle 4002, welche ein Leuchtmittel 4021 zur Lichtabgabe sowie einen länglichen Lichtmischleiter 4022 mit einer ersten Lichteinkoppelseite 4220 zum Einkoppeln des von dem Leuchtmittel abgegebenen Lichts und einer der ersten Lichteinkoppelseite 4220 bezüglich seiner länglichen Erstreckung gegenüberliegenden ersten Lichtauskoppelseite 4221 zur Auskopplung des Lichts des Leuchtmittels 4021 aufweist, eine Voroptik 4003 mit einer zweiten Lichteinkoppelseite 4320 zum Einkoppeln des Lichtes der Lichtquelle 4002 sowie einer zweiten Lichtauskoppelseite 4321 zur definierten Lichtauskopplung in einer Hauptlichtführungsrichtung, eine der Voroptik 4003 nachgelagerte Auskoppeloptik 4004 mit einer dritten Lichteinkoppelseite 4420 zum Einkoppeln des aus der Voroptik 4003 ausgekoppelten Lichts sowie einer dritten Lichtauskoppelseite 4421 zur definierten Lichtabgabe, und eine Streustruktur 4005, welche zwischen der Voroptik 4003 und der Auskoppeloptik 4004 derart angeordnet ist, um das von der Voroptik 4003 ausgekoppelte Licht zu streuen, bevor das so gestreute Licht über die dritte Lichteinkoppelseite 4420 in die Auskoppeloptik 4004 eingekoppelt wird, wobei die Streustruktur 4005 zwischen der Voroptik 4003 und der Auskoppeloptik 4004 und relativ zur Voroptik 4003 in Hauptlichtführungsrichtung beweglich angeordnet ist.

Der Lichtmischleiter kann als Lichtmischstab gebildet sein.

Die Lichtquelle 4002 kann in einzeln ansteuerbare Lichtsegmente 4020 unterteilt sein.

Die Lichtquelle 4002 kann eine oder mehrere LEDs, bevorzugt eine LED-Matrix, umfassen, wobei die LED-Matrix besonders bevorzugt eine Vielzahl einzeln ansteuerbarer LEDs 4021 aufweisen kann, welche die einzeln ansteuerbare Lichtsegmente 4020 der Lichtquelle 4002 bilden.

Der Lichtmischleiter 4022 kann als integrales Bauteil ausgebildet sein oder in mehrere Segmente 4222 unterteilt sein, welche sich jeweils zwischen der ersten Lichteinkoppelseite 4220 und der ersten Lichtauskoppelseite 4221 erstrecken und bevorzugt die einzeln ansteuerbaren Lichtsegmente 4020 bilden.

Die Segmente 4222 können ein zentrales Stabelement 4222a sowie das zentrale Stabelement 4222a umfangsseitig umgebende Ringelemente 4222b und/oder Ringsegmente 4222c aufweisen.

Die Segmente 4222 des Lichtmischleiters 4022 können einen wenigstens teilweise eckigen Querschnitt aufweisen, wobei vorzugsweise wenigstens das zentrale Stabelement 4222a im Wesentlichen einen sechseckigen Querschnitt aufweisen kann.

Den Segmenten 4222 auf Seiten der ersten Lichteinkoppelseite 4220 des Lichtmischleiters 4022 können jeweils eine oder eine Gruppe einzeln ansteuerbarer LEDs 4021 zugeordnet sein, welche bevorzugt in Form der LED-Matrix bereitgestellt sein können, wobei bevorzugt die Gruppen an LEDs 4021 gleichartig ausgebildet sein können.

Der Lichtmischleiter 4022, bevorzugt wenigstens ein Teil der Segmente 4222, besonders vorzugsweise wenigstens das zentrale Stabelement 4222a, kann integral mit der Voroptik 4003 ausgebildet sein.

Der Lichtmischleiter 4022 kann zu der Voroptik 4003 oder zu seiner ersten Lichtauskoppelseite 4221 hin in eine definierte Querschnittsform, vorzugsweise eine runde Querschnittsform, übergehen und insbesondere zulaufen.

Der Lichtmischleiter 4022 kann eine Länge von wenigstens 30mm, vorzugsweise wenigstens 50mm, besonders bevorzugt wenigstens 80mm aufweisen.

Der Lichtmischleiter 4022, insbesondere dessen erste Lichtauskoppelseite 4221, kann in Kontakt, vorzugsweise in flächigem Kontakt, mit der zweiten Lichteinkoppelseite 4320 der Voroptik 4003 stehen.

Die Voroptik 4003 kann eine sphärische Linse, wie eine Halbkugellinse, aufweisen, wobei bevorzugt die zweite Lichteinkoppelseite 4320 wenigstens teilweise flächig und die zweite Lichtauskoppelseite 4321 sphärisch, insbesondere halbkugelförmig, ausgebildet sein kann.

Die Auskoppeloptik 4004 kann eine sphärische Linse, eine asphärische Linse oder eine Fresnellinse sein.

Die Auskoppeloptik 4004 kann eine flächige dritte Lichteinkoppelseite 4420 aufweisen.

Die Streustruktur 4005 kann als separate Streuscheibe oder Streufolie 4050 zwischen der Voroptik 4003 und der Auskoppeloptik 4004 angeordnet sein.

Die Auskoppeloptik 4004 kann relativ zur Voroptik 4003 in Hauptlichtführungsrichtung $L_{4000}$ bzw. in Hauptabstrahlrichtung $H_{4000}$ der Leuchte 4001 beweglich angeordnet sein.

Die Streustruktur 4005 kann direkt in oder auf der Auskoppeloptik 4004, insbesondere auf der dritten Lichteinkoppelseite 4420, als Oberflächenstruktur 4051 bereitgestellt sein.

Die Leuchte 4001 kann ferner eine Manipulationseinheit zum Bewegen der Streustruktur 4005 und/oder der Auskoppeloptik 4004 aufweisen.

Die Streustruktur kann eine Strahlstreuung von 2° bis 15°, bevorzugt 5° bis 10° aufweisen.

Die Streustruktur 4005 kann eine Streustärke Fs = FWTM/FWHM von Fs = 1,5 bei einer Positionierung der Streustruktur 4005 von ¾ der Distanz von der Voroptik 4003 zur Auskoppeloptik 4004 hin aufweisen, wobei FWHM die Halbwertsbreite (full width half maximum) und FWTM die Zehntelwertsbreite (full width tenth maximum) ist.

Die Leuchte 4001 kann einen vorzugsweise einstellbaren Öffnungswinkel der Abstrahlcharakteristik im Bereich von 4° FWHM bis 60° FWHM, vorzugsweise im Bereich von 12° FWHM bis 40° FWHM, alternativ für eine enge Abstrahlcharakteristik im Bereich von 5° FWHM bis 25° FWHM, vorzugsweise von 8° FWHM bis 16° FWHM, aufweisen.

Ein Öffnungswinkel der Abstrahlcharakteristik der Leuchte 4001 kann sich ausgehend von einem mittleren Wert um maximal +/- 4° durch das Bewegen der Streustruktur 4005 relativ zur Voroptik 4003 ändern, vorzugsweise um maximal +/- 2°.

Es ist Verfahren zur Steuerung der Abstrahlcharakteristik einer Leuchte 4001 bereitgestellt, aufweisend die Schritte: Bereitstellen der zuvor beschriebenen Leuchte, und wahlweises Bewegen der Streustruktur 4005 relativ zur Voroptik 4003 in Hauptlichtführungsrichtung zwischen der Voroptik 4003 und der Auskoppeloptik 4004, vorzugsweise mittels der Manipulationseinheit, zur Einstellung der Schärfe einer Abbildung der Lichtverteilung auf einer der Auskoppeloptik 4004 nachgelagerten Beleuchtungsebene $B_{4000}$.

Das Verfahren kann ferner den Schritt des wahlweisen Bewegens der Auskoppeloptik 4004 in Hauptlichtführungsrichtung $L_{4000}$. bzw. in Hauptabstrahlrichtung $H_{4000}$ relativ zur Voroptik 4003, vorzugsweise mittels der Manipulationseinheit, zur Einstellung des Abbildungsmaßstabes der Abbildung der Lichtverteilung auf der Beleuchtungsebene $B_{4000}$ aufweisen.

Das Verfahren kann ferner den Schritt des wahlweise einzelnen Ansteuerns der Lichtsegmente 4020 zur Abbildung einer den angesteuerten Lichtsegmenten 4020 entsprechenden Lichtverteilung in einer der Auskoppeloptik 4004 nachgelagerten Beleuchtungsebene aufweisen.

**Patentansprüche**

1. Leuchte (4001) aufweisend:

eine Lichtquelle (4002), welche ein Leuchtmittel (4021) zur Lichtabgabe sowie einen länglichen Lichtmischleiter (4022) mit einer ersten Lichteinkoppelseite (4220) zum Einkoppeln des von dem Leuchtmittel abgegebenen Lichts und einer der ersten Lichteinkoppelseite (4220) bezüglich seiner länglichen Erstreckung gegenüberliegenden ersten Lichtauskoppelseite (4221) zur Auskopplung des Lichts des Leuchtmittels

(4021) aufweist,
eine Voroptik (4003) mit einer zweiten Lichteinkoppelseite (4320) zum Einkoppeln des Lichtes der Lichtquelle (4002) sowie einer zweiten Lichtauskoppelseite (4321) zur definierten Lichtauskopplung in einer Hauptlichtführungsrichtung,
eine der Voroptik (4003) nachgelagerte Auskoppeloptik (4004) mit einer dritten Lichteinkoppelseite (4420) zum Einkoppeln des aus der Voroptik (4003) ausgekoppelten Lichts sowie einer dritten Lichtauskoppelseite (4421) zur definierten Lichtabgabe, und
eine Streustruktur (4005), welche zwischen der Voroptik (4003) und der Auskoppeloptik (4004) derart angeordnet ist, um das von der Voroptik (4003) ausgekoppelte Licht zu streuen, bevor das so gestreute Licht über die dritte Lichteinkoppelseite (4420) in die Auskoppeloptik (4004) eingekoppelt wird,
wobei die Streustruktur (4005) zwischen der Voroptik (4003) und der Auskoppeloptik (4004) und relativ zur Voroptik (4003) in Hauptlichtführungsrichtung beweglich angeordnet ist, und
wobei der Lichtmischleiter (4022) in mehrere Segmente (4222) unterteilt ist, welche sich jeweils zwischen der ersten Lichteinkoppelseite (4320) und der ersten Lichtauskoppelseite (4321) erstrecken.

2. Leuchte (4001) nach Anspruch 1,

wobei der Lichtmischleiter (4022) als Lichtmischstab gebildet ist, und/oder
wobei der Lichtmischleiter (4022) eine Länge von wenigstens 30mm, vorzugsweise wenigstens 50mm, besonders bevorzugt wenigstens 80mm aufweist.

3. Leuchte (4001) nach Anspruch 1 oder 2,

wobei die Lichtquelle (4002) in einzeln ansteuerbare Lichtsegmente (4020) unterteilt ist, wobei vorzugsweise die Segmente (4222) die einzeln ansteuerbaren Lichtsegmente (4020) bilden, und/oder
wobei die Lichtquelle (4002) eine oder mehrere LEDs, bevorzugt eine LED-Matrix, umfasst, wobei die LED-Matrix besonders bevorzugt eine Vielzahl einzeln ansteuerbarer LEDs (4021) aufweist, welche die einzeln ansteuerbare Lichtsegmente (4020) der Lichtquelle (4002) bilden.

4. Leuchte (4001) nach einem der Ansprüche 1 bis 3,

wobei die Segmente (4222) ein zentrales Stabelement (4222a) sowie das zentrale Stabelement (4222a) umfangsseitig umgebende Ringelemente (4222b) und/oder Ringsegmente (4222c) aufweist, und/oder

wobei die Segmente (4222) des Lichtmischleiters (4022) einen wenigstens teilweise eckigen Querschnitt aufweisen, wobei vorzugsweise wenigstens das zentrale Stabelement (4222a) im Wesentlichen einen sechseckige Querschnitt aufweist, und/oder

wobei den Segmenten (4222) auf Seiten der ersten Lichteinkoppelseite (4220) des Lichtmischleiters (4022) jeweils eine oder eine Gruppe einzeln ansteuerbarer LEDs (4021) zugeordnet ist, welche bevorzugt in Form der LED-Matrix bereitgestellt sind, wobei bevorzugt die Gruppen an LEDs (4021) gleichartig ausgebildet sind.

5. Leuchte (4001) nach einem der Ansprüche 1 bis 4, wobei der Lichtmischleiter (4022), bevorzugt wenigstens ein Teil der Segmente (4222), besonders vorzugsweise wenigstens das zentrale Stabelement (4222a), integral mit der Voroptik (4003) ausgebildet ist.

6. Leuchte (4001) nach einem der Ansprüche 1 bis 5,

wobei der Lichtmischleiter (4022) zu der Voroptik (4003) oder zu seiner ersten Lichtauskoppelseite (4321) hin in eine definierte Querschnittsform, vorzugsweise eine runde Querschnittsform, übergeht und insbesondere zuläuft, und/oder

wobei der Lichtmischleiter (4022) und insbesondere dessen erste Lichtauskoppelseite (4221), in Kontakt, vorzugsweise in flächigem Kontakt, mit der zweiten Lichteinkoppelseite (4320) der Voroptik (4003) steht.

7. Leuchte (4001) nach einem der Ansprüche 1 bis 6, wobei die Voroptik (4003) eine sphärische Linse wie eine Halbkugellinse aufweist, wobei bevorzugt die zweite Lichteinkoppelseite (4320) wenigstens teilweise flächig und die zweite Lichtauskoppelseite (4321) sphärisch, insbesondere halbkugelförmig, ausgebildet ist.

8. Leuchte (4001) nach einem der Ansprüche 1 bis 7,

wobei die Auskoppeloptik (4004) eine sphärische Linse, eine asphärische Linse oder eine Fresnellinse ist, und/ oder

wobei die Auskoppeloptik (4004) eine flächige dritte Lichteinkoppelseite (4420) aufweist.

9. Leuchte (4001) nach einem der Ansprüche 1 bis 8, wobei die Streustruktur (4005) als separate Streuscheibe oder Streufolie (4050) zwischen der Voroptik (4003) und der Auskoppeloptik (4004) angeordnet ist.

10. Leuchte (4001) nach einem der Ansprüche 1 bis 9, wobei die Auskoppeloptik (4004) relativ zur Voroptik (4003) in Hauptlichtführungsrichtung ($L_{4000}$) bzw. in Hauptabstrahlrichtung ($H_{4000}$) der Leuchte (4001) beweglich angeordnet ist, wobei vorzugsweise die Streustruktur (4005) direkt in oder auf der Auskoppeloptik (4004), insbesondere auf der dritten Lichteinkoppelseite (4420), als Oberflächenstruktur (4051) bereitgestellt ist.

11. Leuchte (4001) nach einem der Ansprüche 1 bis 10, ferner aufweisend eine Manipulationseinheit zum Bewegen der Streustruktur (4005) und/oder der Auskoppeloptik (4004).

12. Leuchte (4001) nach einem der Ansprüche 1 bis 11, wobei die Streustruktur eine Strahlstreuung von 2° bis 15°, bevorzugt 5° bis 10° aufweist, und/oder wobei die Streustruktur (4005) eine Streustärke $Fs = FWTM/FWHM$ von $Fs = 1,5$ bei einer Positionierung der Streustruktur (4005) von ¾ der Distanz von der Voroptik (4003) zur Auskoppeloptik (4004) hin aufweist, wobei FWHM die Halbwertsbreite (full width half maximum) und FWTM die Zehntelwertsbreite (full width tenth maximum) ist.

13. Leuchte (4001) nach einem der Ansprüche 1 bis 12,

wobei die Leuchte (4001) einen vorzugsweise einstellbaren Öffnungswinkel der Abstrahlcharakteristik im Bereich von 4° FWHM bis 60° FWHM, vorzugsweise im Bereich von 12° FWHM bis 40° FWHM, alternativ für eine enge Abstrahlcharakteristik im Bereich von 5° FWHM bis 25° FWHM, vorzugsweise von 8° FWHM bis 16° FWHM, aufweist, und/oder

wobei sich ein Öffnungswinkel der Abstrahlcharakteristik der Leuchte (4001) ausgehend von einem mittleren Wert um maximal +/- 4° durch das Bewegen der Streustruktur (4005) relativ zur Voroptik (4003) ändert, vorzugsweise um maximal +/- 2°.

14. Verfahren zur Steuerung der Abstrahlcharakteristik einer Leuchte (4001), aufweisend die Schritte:

• Bereitstellen einer Leuchte (4001) gemäß einem der Ansprüche 1 bis 13,
• Wahlweises Bewegen der Streustruktur (4005) relativ zur Voroptik (4003) in Hauptlichtführungsrichtung zwischen der Voroptik (4003) und der Auskoppeloptik (4004), vorzugsweise mittels der Manipulationseinheit, zur Einstellung der Schärfe einer Abbildung der Lichtverteilung auf einer der Auskoppeloptik (4004) nachgelagerten Beleuchtungsebene ($B_{4000}$).

**15.** Verfahren nach Anspruch 14,

ferner aufweisend den Schritt des wahlweisen Bewegens der Auskoppeloptik (4004) in Hauptlichtführungsrichtung ($L_{4000}$) bzw. in Hauptabstrahlrichtung ($H_{4000}$) relativ zur Voroptik (4003), vorzugsweise mittels der Manipulationseinheit, zur Einstellung des Abbildungsmaßstabes der Abbildung der Lichtverteilung auf der Beleuchtungsebene ($B_{4000}$), und/oder
ferner aufweisend den Schritt des wahlweise einzelnen Ansteuerns der Lichtsegmente (4020) zur Abbildung einer den angesteuerten Lichtsegmenten (4020) entsprechenden Lichtverteilung in einer der Auskoppeloptik (4004) nachgelagerten Beleuchtungsebene ($B_{4000}$).

**Claims**

**1.** A lamp (4001) comprising:

a light source (4002) comprising a light emitting means (4021) for light output and an elongate light mixing conductor (4022) having a first light coupling side (4220) for coupling in the light emitted by the light emitting means and a first light decoupling side (4221) opposite to the first light coupling side (4220) light, relative to its longitudinal extent, for decoupling the light from the light emitting means (4021),
a pre-optical system (4003) having a second light coupling side (4320) for coupling in the light from the light source (4002) as well as a second light decoupling side (4321) for defined light decoupling in a main light guidance direction,
a decoupling optical system (4004) downstream of the pre-optical system (4003) with a third light coupling side (4420) for coupling the light decoupled from the pre-optical system (4003), as well as a third light decoupling side (4421) for defined light output, and
a scattering structure (4005) arranged between the pre-optical system (4003) and the decoupling optical system (4004) to scatter the light decoupled from the pre-optical system (4003) before the thus scattered light is coupled via the third light coupling side (4420) into the decoupling optical system (4004), wherein the scattering structure (4005) is movably arranged between the pre-optical system (4003) and the decoupling optical system (4004) and relative to the pre-optical system (4003) in the main light guidance direction, and
wherein the light mixing conductor (4022) is divided into a plurality of segments (4222) each extending between the first light coupling side (4320) and the first light decoupling side (4321).

**2.** The lamp (4001) according to claim 1,

wherein the light mixing conductor (4022) is formed as a light mixing rod, and/or
wherein the light mixing conductor (4022) has a length of at least 30 mm, preferably at least 50 mm, particularly preferably at least 80 mm.

**3.** The lamp (4001) according to claim 1 or 2,

wherein the light source (4002) is divided into individually controllable light segments (4020), wherein preferably the segments (4222) form the individually controllable light segments (4020), and/or
wherein the light source (4002) comprises one or more LEDs, preferably an LED matrix, wherein the LED matrix particularly preferably comprises a plurality of individually controllable LEDs (4021) forming the individually controllable light segments (4020) of the light source (4002).

**4.** The lamp (4001) according to any one of claims 1 to 3,

wherein the segments (4222) comprise a central rod member (4222a) and the central rod member (4222a) has circumferentially surrounding ring members (4222b) and/or ring segments (4222c), and/or
wherein the segments (4222) of the light mixing conductor (4022) have an at least partially angular cross-section, wherein preferably at least the central rod element (4222a) has a substantially hexagonal cross-section, and/or
wherein, on the part of the first light coupling side (4220) of the light mixing conductor (4022), one or a group of individually controllable LEDs (4021) is associated with each of the segments (4222), said LEDs preferably being provided in the form of the LED matrix, wherein preferably the groups of LEDs (4021) are similarly configured.

**5.** The lamp (4001) according to any one of claims 1 to 4, wherein the light mixing conductor (4022), preferably at least a portion of the segments (4222), particularly preferably at least the central rod member (4222a), is formed integrally with the pre-optical system (4003).

**6.** The lamp (4001) according to any one of claims 1 to 5,

wherein the light mixing conductor (4022) transitions and, in particular, tapers to a defined cross-sectional shape, preferably a round cross-sectional shape, towards the pre-optical system (4003) or its first light decoupling side (4321), and/or

wherein the light mixing conductor (4022), and in particular its first light decoupling side (4221), is in contact, preferably in flat contact, with the second light coupling side (4320) of the pre-optical system (4003).

7. The lamp (4001) according to any one of claims 1 to 6, wherein the pre-optical system (4003) comprises a spherical lens, such as a hemispherical lens, wherein preferably the second light coupling side (4320) is configured at least partially flat and the second light decoupling side (4321) is configured spherical, in particular hemispherical.

8. The lamp (4001) according to any one of claims 1 to 7,

wherein the decoupling optical system (4004) is a spherical lens, an aspherical lens, or a Fresnel lens, and/or

wherein the decoupling optics (4004) comprises a flat third light coupling side (4420).

9. The lamp (4001) according to any one of claims 1 to 8, wherein the scattering structure (4005) is arranged as a separate scattering disk or scattering foil (4050) between the pre-optical system (4003) and the decoupling optical system (4004).

10. The lamp (4001) according to any one of claims 1 to 9, wherein the decoupling optical system (4004) is movably arranged, relative to the pre-optical system (4003), in the main light guidance direction ($L_{4000}$) and/or in the main radiating direction ($H_{4000}$) of the lamp (4001), wherein preferably the scattering structure (4005) is provided directly in or on the decoupling optical system (4004), in particular on the third light coupling side (4420), as a surface structure (4051).

11. The lamp (4001) according to any one of claims 1 to 10, further comprising a manipulation unit for moving the scattering structure (4005) and/or the decoupling optical system (4004).

12. The lamp (4001) according to any one of claims 1 to 11, wherein the scattering structure has a beam scatter from 2° to 15°, preferably from 5° to 10°, and/or wherein the scattering structure (4005) has a scattering strength Fs = FWTM/FWHM of Fs = 1.5 when the scattering structure (4005) is positioned 3/4 of the distance from the pre-optical system (4003) to the decoupling optical system (4004), wherein FWHM is the full width half maximum and FWTM is the full width tenth maximum.

13. The lamp (4001) according to any one of claims 1 to 12,

wherein the lamp (4001) has a preferably adjustable opening angle of the radiating characteristic in the range of 4° FWHM to 60° FWHM, preferably in the range of 12° FWHM to 40° FWHM, alternatively for a narrow radiating characteristic in the range of 5° FWHM to 25° FWHM, preferably from 8° FWHM to 16° FWHM, and/or wherein an opening angle of the radiating characteristic of the lamp (4001) changes from an average value by a maximum of +/-4° by moving the scattering structure (4005) relative to the pre-optical system (4003), preferably by a maximum of +/-2°.

14. A method for controlling the radiating characteristic of a lamp (4001), comprising the steps:

• providing a lamp (4001) according to any one of claims 1 to 13,
• optionally moving the scattering structure (4005) relative to the pre-optical system (4003) in the main light guidance direction between the pre-optical system (4003) and the decoupling optical system (4004), preferably by means of the manipulation unit, for adjusting the sharpness of a mapping of the light distribution on an illumination plane ($B_{4000}$) arranged downstream of the decoupling optical system (4004).

15. The method according to claim 14,

further comprising the step of optionally moving the decoupling optical system (4004) in the main light guidance direction ($L_{4000}$) and/or in the main radiating direction ($H_{4000}$) relative to the pre-optical system (4003), preferably by means of the manipulation unit, for adjusting the mapping scale of the mapping of the light distribution on the illumination plane ($B_{4000}$), and/or further comprising the step of optionally controlling the light segments (4020) individually to map a light distribution corresponding to the controlled light segments (4020), in a lighting plane ($B_{4000}$) arranged downstream of the decoupling optical system (4004).

## Revendications

1. Luminaire (4001) présentant :

une source de lumière (4002) présentant un moyen lumineux (4021) destiné à émettre de la lumière ainsi qu'un guide mélangeur de lumière (4022) allongé comportant un premier côté d'injection de lumière (4220) destiné à l'injection de la lumière émise par le moyen lumineux et un premier côté de sortie de lumière (4221) opposé au premier côté d'injection de lumière (4220) eu égard à son étendue longitudinale, lequel est destiné à faire sortir la lumière provenant du moyen lumineux (4021),

une optique amont (4003) comportant un deuxième côté d'injection de lumière (4320) destiné à l'injection de la lumière de la source de lumière (4002) ainsi qu'un deuxième côté de sortie de lumière (4321) destiné à une sortie de lumière définie, dans une direction principale d'orientation de la lumière,

une optique de sortie (4004) située en aval de l'optique amont (4003) et comportant un troisième côté d'injection de lumière (4420) destiné à l'injection de la lumière sortant de l'optique amont (4003) ainsi qu'un troisième côté de sortie de lumière (4421) destiné à une émission de lumière définie, et

une structure de diffusion (4005) disposée entre l'optique amont (4003) et l'optique de sortie (4004) pour pouvoir diffuser la lumière sortant par l'optique amont (4003) avant que ladite lumière ainsi diffusée ne soit injectée, par le troisième côté d'injection de lumière (4420), dans l'optique de sortie (4004) ; ladite structure de diffusion (4005) étant disposée entre l'optique amont (4003) et l'optique de sortie (4004) et étant mobile par rapport à l'optique amont (4003) dans la direction principale d'orientation de la lumière, et

ledit guide mélangeur de lumière (4022) étant divisé en plusieurs segments (4222) qui s'étendent respectivement entre le premier côté d'injection de lumière (4320) et le premier côté de sortie de lumière (4321).

2. Luminaire (4001) selon la revendication 1,

dans lequel le guide mélangeur de lumière (4022) est conçu sous la forme d'une tige de mélange de lumière, et/ou
dans lequel le guide mélangeur de lumière (4022) présente une longueur d'au moins 30 mm, de préférence d'au moins 50 mm et plus préférablement d'au moins 80 mm.

3. Luminaire (4001) selon la revendication 1 ou 2,

dans lequel la source de lumière (4002) est divisée en segments lumineux (4020) susceptibles d'être commandés individuellement, les segments (4222) constituant de préférence lesdits segments lumineux (4020) susceptibles d'être commandés individuellement, et/ou
dans lequel la source de lumière (4002) comprend une ou plusieurs DEL, de préférence une matrice de DEL, ladite matrice de DEL présentant notamment de préférence une pluralité de DEL (4021) susceptibles d'être commandées individuellement, lesquelles constituent les segments lumineux (4020) de la source de lumière (4002) susceptibles d'être commandés individuellement.

4. Luminaire (4001) selon l'une des revendications 1 à 3,

dans lequel les segments (4222) présentent un élément de tige central (4222a) ainsi que des éléments d'anneau (4222b) et/ou segments d'anneau (4222c) entourant périphériquement ledit élément de tige central (4222a), et/ou
dans lequel les segments (4222) du guide mélangeur de lumière (4022) présentent une section transversale au moins partiellement angulaire, l'élément de tige central (4222a), au moins, présentant de préférence essentiellement une section transversale hexagonale, et/ou
dans lequel une DEL ou un groupe de DEL (4021) susceptibles d'être commandées individuellement est associé(e) aux segments (4222) respectifs sur le premier côté d'injection de lumière (4220) du guide mélangeur de lumière (4022), lesquelles DEL se trouvent de préférence sous la forme d'une matrice de DEL, les groupes de DEL (4021) étant de préférence de conception identique.

5. Luminaire (4001) selon l'une des revendications 1 à 4, dans lequel le guide mélangeur de lumière (4022), de préférence au moins une partie des segments (4222), notamment de préférence au moins l'élément de tige central (4222a), est conçu d'un seul tenant avec l'optique amont (4003).

6. Luminaire (4001) selon l'une des revendications 1 à 5,

dans lequel le guide mélangeur de lumière (4022), en direction de l'optique amont (4003) ou vers son premier côté de sortie de lumière (4321), progresse vers une forme de section transversale définie, de préférence une forme de section transversale ronde et se termine notamment par une telle forme, et/ou
dans lequel le guide mélangeur de lumière (4022), et notamment son premier côté de sortie de lumière (4221), est en contact, de préférence en contact plat, avec le deuxième côté d'injection de lumière (4320) de l'optique amont (4003).

7. Luminaire (4001) selon l'une des revendications 1 à 6, dans lequel l'optique amont (4003) présente une lentille sphérique telle qu'une lentille hémisphérique, le deuxième côté d'injection de lumière (4320) étant de préférence au moins partiellement plat et le deuxième côté de sortie de lumière (4321) sphérique, notamment hémisphérique.

8. Luminaire (4001) selon l'une des revendications 1 à 7,

   dans lequel l'optique de sortie (4004) est une lentille sphérique, une lentille asphérique ou une lentille de Fresnel, et/ou
   dans lequel l'optique de sortie (4004) présente un troisième côté d'injection de lumière (4420) plat.

9. Luminaire (4001) selon l'une des revendications 1 à 8, dans lequel la structure de diffusion (4005), sous la forme d'un disque ou d'une feuille de diffusion (4050) séparée, est disposée entre l'optique amont (4003) et l'optique de sortie (4004).

10. Luminaire (4001) selon l'une des revendications 1 à 9, dans lequel l'optique de sortie (4004) est mobile par rapport à l'optique amont (4003) dans la direction principale d'orientation de la lumière ($L_{4000}$) voire la direction principale d'émission de la lumière ($H_{4000}$) du luminaire (4001), ladite structure de diffusion (4005) étant réalisée sous la forme d'une structure de surface (4051) de préférence directement dans ou sur l'optique de sortie (4004), notamment sur le troisième côté d'injection de lumière (4420).

11. Luminaire (4001) selon l'une des revendications 1 à 10, présentant en outre une unité de manipulation permettant de déplacer la structure de diffusion (4005) et/ou l'optique de sortie (4004).

12. Luminaire (4001) selon l'une des revendications 1 à 11, dans lequel la structure de diffusion présente une diffusion de faisceau allant de 2° à 15°, de préférence de 5° à 10°, et/ou dans lequel la structure de diffusion (4005) présente une force de diffusion Fs = FWTM/FWHM correspondant à Fs = 1,5 pour un positionnement de la structure de diffusion (4005) aux trois quarts de la distance séparant l'optique amont (4003) de l'optique de sortie (4004), FWHM désignant la largeur à mi-hauteur (full width half maximum) et FWTM désignant la largeur au dixième de la hauteur (full width tenth maximum).

13. Luminaire (4001) selon l'une des revendications 1 à 12,

   ledit luminaire (4001) présentant un angle d'ouverture, de préférence réglable, de la caractéristique de rayonnement situé dans la plage de 4° FWHM à 60° FWHM, de préférence dans la plage de 12° FWHM à 40° FWHM, ou en variante pour une caractéristique de rayonnement étroite, dans la plage de 5° FWHM à 25° FWHM, de préférence de 8° FWHM à 16° FWHM, et/ou dans lequel un angle d'ouverture de la caractéristique de rayonnement du luminaire (4001) varie, du fait du déplacement de la structure de diffusion (4005) par rapport à l'optique amont (4003), d'au maximum +/- 4° et de préférence d'au maximum +/- 2°, en partant d'une valeur moyenne.

14. Procédé de commande de la caractéristique de rayonnement d'un luminaire (4001), présentant les étapes suivantes consistant à :

   • fournir un luminaire (4001) selon l'une des revendications 1 à 13,
   • déplacer sélectivement la structure de diffusion (4005) par rapport à l'optique amont (4003) dans la direction principale d'orientation de la lumière entre l'optique amont (4003) et l'optique de sortie (4004), de préférence au moyen de l'unité de manipulation, pour régler la clarté d'une représentation de la répartition de la lumière sur un plan d'éclairage ($B_{4000}$) situé en aval de l'optique de sortie (4004).

15. Procédé selon la revendication 14,

   présentant en outre l'étape consistant à déplacer de manière sélective l'optique de sortie (4004) dans la direction principale d'orientation de la lumière ($L_{4000}$) voire dans la direction principale d'émission de la lumière ($H_{4000}$) par rapport à l'optique amont (4003), de préférence au moyen de l'unité de manipulation, pour régler l'échelle de la représentation de la répartition de la lumière sur le plan d'éclairage ($B_{4000}$), et/ou présentant en outre l'étape consistant à commander individuellement, de manière sélective, les segments lumineux (4020) en vue de la représentation d'une répartition de la lumière correspondant aux segments lumineux (4020) commandés, dans un plan d'éclairage ($B_{4000}$) situé en aval de l'optique de sortie (4004).

Fig. 1

Fig. 2

Fig. 3

Fig. 4

Fig. 5

Fig. 6

Fig. 7

4022

4002    4220    4020(4222; 4222a)

4020(4222; 4222c)

4020(4222; 4222c)

4021    4021

# Fig. 8

$H_{4000}$    4004    4005(4051)

4321    4003    4001

4002

$L_{4000}$    4020(4222; 4222a)

4421    4021

$P1_{4000}$    4221

$P2_{4000}$    4420    4022    4021
$P3_{4000}$    4220    (4222; 4222b)
(4222; 4222b)    4006

4220

# Fig. 9

Fig. 10

Fig. 13

(a)     (b)     (c)     (d)     (e)     (f)

Fig. 11

(a)     (b)     (c)     (d)     (e)     (f)

Fig. 12

EP 3 623 695 B1

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015003061 A
- US 2011058388 A
- US 2006039160 A